# EUROPEAN PATENT SPECIFICATION

(11) **EP 0 501 036 B1**
(45) Date of publication and mention of the grant of the patent: **15.03.1995**
(21) Application number: 91121979.8
(22) Date of filing: 20.12.1991
(51) Int. Cl.: B60L 11/18, H02P 3/08

(54) **Speed control device for electric motor vehicles**
Geschwindigkeitsregelvorrichtung für elektrische Fahrzeuge
Appareil de commande de vitesse pour véhicules électriques

(30) Priority: 27.02.1991 JP 55855/91
(43) Date of publication of application: 02.09.1992
(73) Proprietor: SUZUKI MOTOR CORPORATION, Hamamatsu-shi, Shizuoka-ken (JP)
(72) Inventor: Shibata, Akira, c/o Suzuki Motor Corporation, Hamamatsu-shi, Shizuoka-ken (JP)
(74) Representative: Klingseisen, Franz, Dipl.-Ing.

(56) References cited:
- DE-A- 1 513 648
- ELEKTRONIK, vol. 38, no. 18, 1 September 1989, MUNCHEN, DE; H. SAX:'GLEICHSTROMMOTOREN RICHTIG ANSTEUERN'

## Description

### [INDUSTRIAL FIELD OF UTILIZATION]

This invention relates to a speed control device for electric motor vehicles, and particularly to a speed control device for electric motor vehicles designed for separately executing a motor drive control and a dynamic brake control by means of PWM control.

### [BACKGROUND OF THE ART]

In general, in a speed control device for electric motor vehicles, a revolution number pulse of a frequency proportional to the revolution number of the motor is generated, and this pulse is converted to a direct current by a frequency/voltage (F/V) converter. By feeding electric current to the motor and stopping thereof in accordance with the result of comparison between this output voltage and the output voltage of the accelerator, the revolution number of a motor is controlled. By the way, in an electric motor vehicle and particularly in an electric motor wheelchair, the vehicle must be stopped smoothly in order not to give a shock or a surprise to its user. As means for this purpose, there are devices for obtaining a negative acceleration by utilizing motor-specific characteristics and features besides by utilizing mechanical brakes, such as electromagnetic brakes, etc. As such means, there can chiefly be considered a dynamic braking and a reverse braking. In the case of reverse braking, however, it becomes complicated in respect of circuit construction and timing, and adjustment of acceleration and deceleration is difficult. Therefore, in recent times, the dynamic braking is comparatively more frequently used.

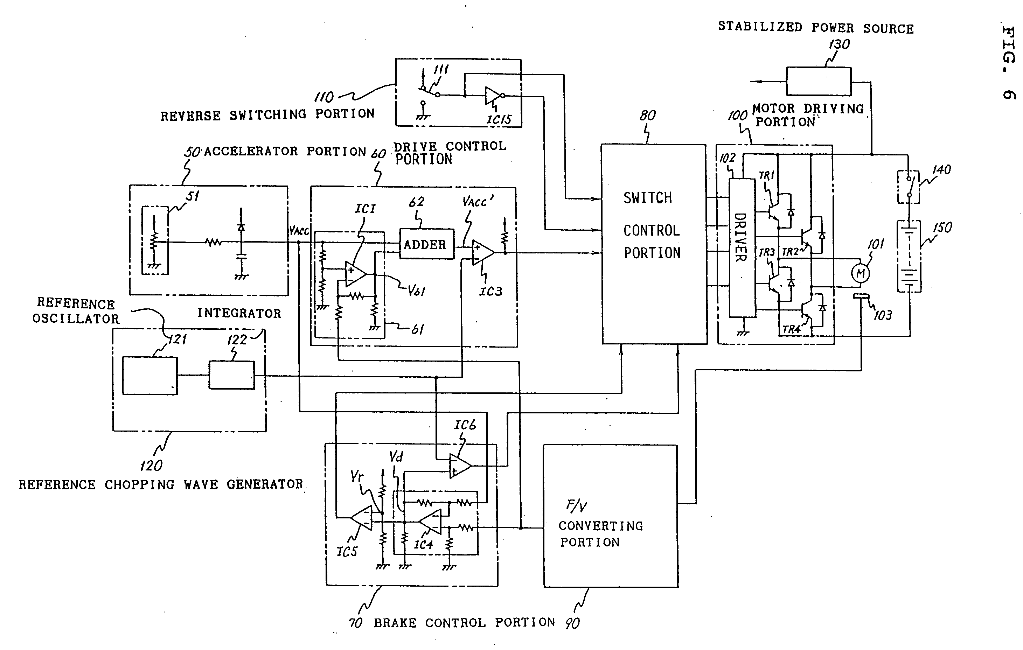

In Fig. 6, there is illustrated one example of a speed control device for electric motor vehicles, in which a vehicle is stopped by utilizing a dynamic braking.

The speed control device for electric motor vehicles shown in this Fig. 6 includes a chopping wave generator 120 for generating a reference chopping wave, an accelerator portion 50 for outputting an accelerating voltage V_{ACC} corresponding to an amount of operation of an accelerator 51, and a drive control portion 60 for generating a motor driving PWM signal by comparing the same with the reference chopping wave based on a difference between the accelerating voltage V_{ACC} output from the accelerator portion 50 and a motor revolution number equivalent voltage V_{FV} generated in an F/V converter portion as will be described in accordance with the revolution number of a motor 101. It Includes a brake control portion 70 for generating a dynamic braking PWM signal by comparing the same with the reference chopping wave in accordance with a difference between the revolution number equivalent voltage V_{FV} and the accelerating voltage V_{ACC} and generating a brake signal when this difference exceeds a predetermined value, a switch control portion 80 for switching the PWM signal of the drive control portion 60 and the PWM signal of the brake control portion 70 from one to the other and outputting the correctly switched signal, and a motor drive portion 100 for drive controlling and brake controlling the motor 101 in accordance with the PWM signal output from this switch control portion 80. These component elements will briefly be described.

The accelerator portion 50 includes an accelerator 51 and generates an accelerating voltage V_{ACC} corresponding to an amount of operation of the accelerator 51.

The drive control portion 60 includes a subtractor 61 for generating an output obtained by subtracting the revolution number equivalent voltage V_{FV} from the accelerating voltage V_{ACC}, an adder 62 for adding the output of the subtractor 61 to the accelerating voltage V_{ACC}, and an comparator IC 3 for comparing the output of the adder 62 with the reference chopping wave signal and outputting a PWM signal having a pulse width corresponding to the output of the adder 62. The portion 60 outputs a PWM signal having a pulse width corresponding to the difference between the accelerating voltage V_{ACC} and the revolution number equivalent voltage V_{FV} and addition of the accelerating voltage V_{ACC}.

The brake control portion 70 includes a subtractor 71 for generating an output obtained by subtracting the accelerating voltage V_{ACC} from the revolution number equivalent voltage V_{FV}, a comparator IC 5 for comparing the output of this subtractor 71 with the reference voltage and outputting a brake signal as an output signal of a "L (low)" level when the output of the subtractor 71 becomes larger, and a comparator IC 6 for comparing the output of the subtractor 71 with the reference chopping wave signal and generating a PWM signal having a pulse width corresponding to the output of the subtractor 71. The portion 70 outputs a PWM signal having a pulse width corresponding to the difference between the revolution number equivalent voltage V_{FV} and the accelerating voltage V_{ACC}.

The switch control portion 80 generates PWM signals from both the drive control portion 60 and brake control portion 70, and a control output to a motor driving portion 100, which will be described afterward, corresponding to a brake signal output from the brake control portion 70 and a switch signal output by a reverse switch portion 110 which will be described afterward.

The motor driving portion 100 comprises a plurality of power transistors TR1 through TR4 for driving the motor 101, and a driver 102 for converting a PWM signal to a driving current and rotating the motor 101 normally or reversely at a revolution number corresponding to the PWM signal by actuating the transistors TR1 and TR4 or TR2 and TR3 in accordance with the reverse switching. The portion 100 drive-controls the motor 101.

An FV converting portion 90 converts a revolution number pulse having a frequency corresponding to the motor revolution number generated from a pulse generator 103 coaxial with the motor 101 to F/V (frequency/voltage) and generates a revolution number equivalent voltage V_{FV}.

A reference chopping wave generator 120 includes a reference oscillator 121, an integrating circuit 122 for integrating a reference frequency pulse of the reference oscillator 121, and a buffer amplifier comprising an operation amplifier IC 14 for outputting the output of the integrating circuit 122 in the form of a chopping wave. The generator 120 generates a reference chopping wave.

The reverse switch portion 110 includes a switch 111 for switching a "H (high)" level signal and a "L (low)" level signal from one to the other in accordance with the normal rotation and reverse rotations and outputting the correctly switched signal, and an inverter IC 15 for outputting a signal obtained by inverting the output signal of the switch 111. The portion 110 rotates the motor 101 normally and reversely in accordance with this signal.

In Fig. 6, the numeral 130 denotes a stabilized power source for generating a stabilized voltage V_{CC} when voltage of a battery 150 is supplied through a main switch 140 and supplying the same to various other parts other the motor 101 as a power source.

Next, operation of this speed control device, as a whole, will briefly be described.

In Fig. 6, the accelerator portion 50 generates an accelerating voltage V_{ACC} corresponding to the amount of operation of the accelerator 51.

The accelerating voltage V_{ACC} is fed to the subtractor 61 which generates an output obtained by subtracting the revolution number equivalent voltage V_{FV} from this accelerating voltage V_{ACC}. This output is added to the accelerating voltage V_{ACC} by the adder 62, and its output V₆₂ is fed to the comparator IC 3 which compares the output of the adder IC 2 with the reference chopping wave and generates a PWM signal having a pulse width corresponding to the amount of the output of the adder 62.

This PWM signal is input into the switch control portion 80 where it is switched in accordance with a normal or a reverse signal from the reverse switch portion 110 and output to the motor driving portion 100. In the motor driving portion 100, the PWM signal is converted to a driving current by the driver 102 to actuate the transistors TR1 and TR4 or TR2 and TR3 in accordance with the normal or reverse signal so that the motor 101 is rotated normally or reversely at a revolution number corresponding to the PWM signal.

With a certain revolution number of the motor 101, the subtractor 61 outputs a voltage of a certain level, and this output voltage is added to the accelerating voltage V_{ACC} by the adder 62. As a result, the comparator IC 3 generates a certain PWM signal by which the motor 101 is rotated. When the vehicle speed is lowered as the load is increased, an output voltage of the adder 62 is also increased, and the duty of the PWM signal becomes large. By this, it is controlled such that the driving current is increased in the motor driving portion 100 to recover the decelerated speed of the motor 101. On the contrary, when the vehicle speed is increased, the output voltage of the subtractor 61 is lowered. By this, it is controlled such that the revolution number of the motor 101 is lowered.

In this way, by means of comparison between the accelerating voltage V_{ACC} and the revolution number equivalent voltage V_{FV} of the motor 101, it is fed back to the accelerating voltage V_{ACC} from the subtractor 61 in accordance with the level, and by increasing or decreasing the rate for feeding power to the motor 101, the vehicle speed is controlled.

On the other hand, it is designed such that when the revolution number equivalent voltage V_{FV} is larger than the accelerating voltage V_{ACC} by a certain degree or more, that is, when the vehicle is in its decelerating state, the speed is not lowered immediately. The subtractor 71 generates an output obtained by subtracting the accelerating voltage V_{ACC} from the revolution number equivalent voltage V_{FV}, and the comparator IC 5 generates an output of a "L" level when an output V₇₁ of the subtractor 71 becomes larger than a preset voltage Vᵣ, so that an input from the drive control portion 60 is cut off by the switch control portion 80 and the output of the subtractor IC 71 is compared with the reference chopping wave by the comparator IC 6 in order to generate a PWM signal having a pulse width proportional to an absolute value of the difference between the revolution number equivalent voltage V_{FV} and the accelerating voltage V_{ACC}. This PWM signal is input into the motor driving portion 100 to drive the transistors TR1 through TR4 in such a manner as to be actuated for shorting the motor 101 in accordance with this PWM signal. Accordingly, the electric power generated by the motor 101 acting as a generator is consumed in a short circuit, thereby effecting a so-called dynamic braking. This dynamic braking is effected in accordance with the pulse width of the PWM signal, wherein the afore-mentioned braking is effected by being controlled by the revolution number equivalent voltage V_{FV}, accelerating voltage V_{ACC}, etc.

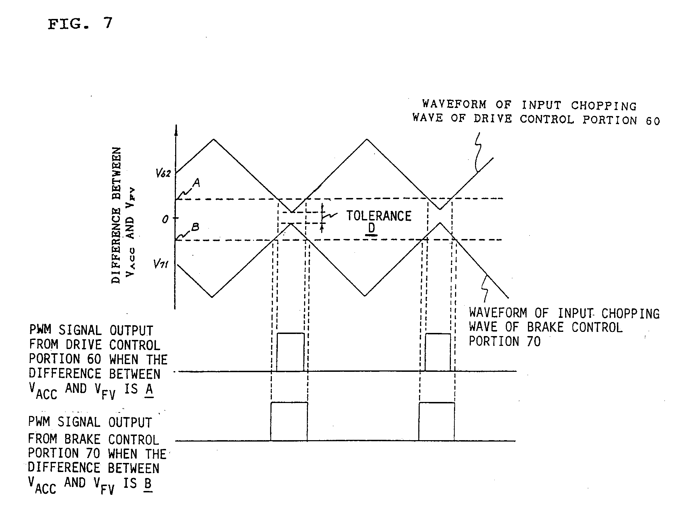

Shown in Fig. 7 is a chart of a relation between the PWM signal outputs of the drive control portion 60 and brake control portion 70 relative to the difference between the accelerating voltage V_{ACC} and the revolution number equivalent voltage V_{FV}. The positive portion of the difference between the accelerating voltage V_{ACC} and the revolution number equivalent voltage V_{FV} on the vertical axis corresponds to the output V₆₂ of the adder 62 of the drive control portion 60, while the negative portion corresponds to the output V₇₁ of the subtractor 71. The switching from one to the other is determined by the preset voltage Vᵣ of the comparator IC 5. In Fig. 7, the waveforms of the PWM signals of the drive control portion 60 and brake control portion 70 can be found from the points of intersection between the straight lines corresponding to the difference between the accelerating voltage V_{ACC} and the revolution number equivalent voltage V_{FV} and the input chopping waveforms in Fig. 7. For example, when the difference between the accelerating voltage V_{ACC} and the revolution number equivalent voltage V_{FV} is "A", the PWM signal output waveform of the drive control portion 60 becomes something like that shown in the higher stage of the lower two stages from the points of intersection between the straight lines drawn upto "A" shown in the higher stage of the upper two stages on the vertical axis and the input chopping waveforms in this Fig. 7. At that time, since the output waveforms of the PWM signal of the brake control portion 70 have no point of intersection with the input chopping waveforms, they remain in the "L" level. When the difference between the accelerating voltage V_{ACC} and the revolution number equivalent voltage V_{FV} is "B", the output waveforms of the PWM signal of the brake control portion 70 likewise become something like that shown in the higher stage of the lower two stages from the points of intersection with the input chopping waveforms, and the output waveforms of the PWM signal of the drive control portion 60 remain in the "L" level since they have no point of intersection with the input chopping waveforms.

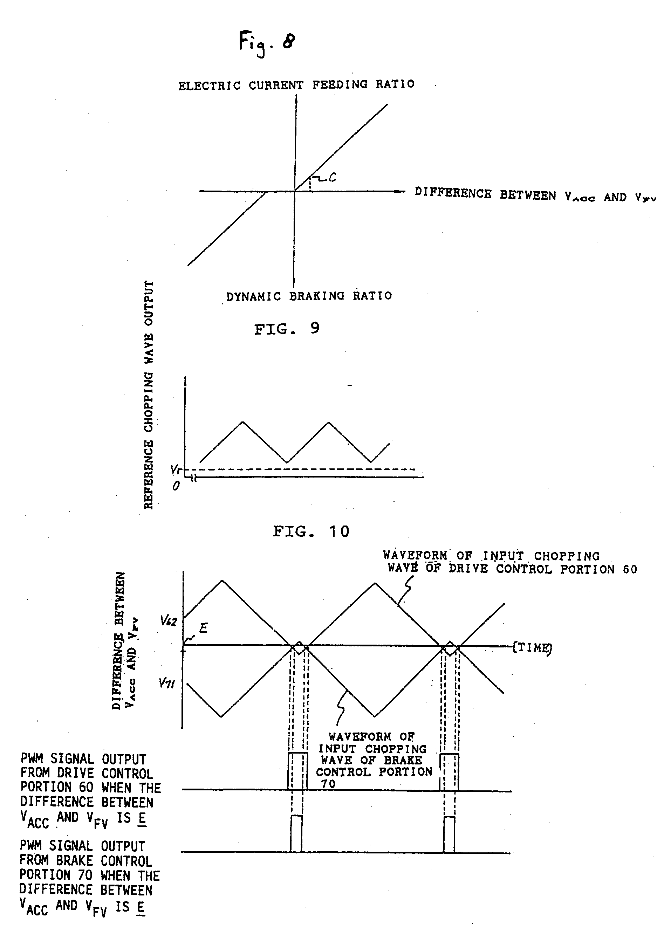

Fig. 8 is a graph showing how the ratios of feed of power and dynamic braking to the motor 101 are controlled in accordance with the difference between the accelerating voltage V_{ACC} and the revolution number equivalent voltage V_{FV}. When the vehicle is traveling on a flat road, they are balanced approximately at C point where the accelerating voltage V_{ACC} is slightly higher than the revolution number equivalent voltage V_{FV}.

Ideally speaking, although it is desirable that the graph of Fig. 8 becomes a straight or linear line, a tolerance is required so that the feed of electric current and dynamic braking to the motor 101 are not executed at the same time. In Fig. 7, there is a small space between the input chopping waveforms of the drive control portion 60 and brake control portion 70, and this small space is the tolerance for preventing the feed of electric current and dynamic braking to the motor 101 from being executed at the same time. Because of this tolerance, the ratios of feed of electric current and dynamic braking to the motor 101 become "zero" in the vicinity of the area where the difference between the accelerating voltage V_{ACC} and the revolution number equivalent voltage V_{FV} is "zero" In Fig. 8, and they become a folded straight line. The tolerance of Fig. 7 is established by adjusting the maximum and minimum voltages of the reference chopping wave from the reference chopping wave generator 120, the preset voltage Vᵣ of the comparator IC 5, and gains of the drive control portion 60, brake control portion 70, etc.

Fig. 9 is a graph showing a relation between the maximum and minimum voltages of the reference chopping wave and the predetermined voltage Vᵣ of the comparator IC 5. In order to secure the above-mentioned tolerance, the preset voltage Vᵣ of the comparator IC 5 is set to be lower than the minimum voltage of the reference chopping wave.

### [PROBLEM TO BE SOLVED BY THE INVENTION]

In the above-mentioned speed control device of Fig. 6, since it becomes a folded straight line because the ratios of feed of current and dynamic braking to the motor become "zero" in the vicinity of the area where the difference between the accelerating voltage V_{ACC} and the revolution number equivalent voltage V_{FV} is "zero", there is a speed area where the ratios of feed of current and dynamic braking ratio to the motor become "zero" In the vicinity of the area where the difference between the accelerating voltage V_{ACC} and the revolution number equivalent voltage V_{FV} is "zero" in opening degree of acceleration. Accordingly, the linearity of speed control is extremely deteriorated in the vicinity of this speed area. As a result, the operation feeling is extremely deteriorated in such speed area. There is, for example, an instance where the speed is intermittently changed, as on a slope, from a speed where the difference between the accelerating voltage VACC and the revolution number equivalent voltage VFV becomes "zero" to a speed where the ratios of feed of current and dynamic braking to the motor do not become "zero" or in the reverse way in accordance with the constant at the time the speed control device responds. In order to obviate this, in Fig. 7, since there is a tolerance between the input chopping waveforms of the drive control portion 60 and brake control portion 70, the linearity of the speed control can be improved by removing the tolerance. If the tolerance is removed, however, since there is no tolerance between the input chopping waveforms between the drive control portion 60 and brake control portion 70 of Fig. 7, the maximum and minimum voltages of the reference chopping wave, the preset voltage Vᵣ of the comparator IC 5, gains of the drive control portion 60 and brake control portion 70, etc. become irregular. As a result, there appears an area, where the two input chopping waveforms are overlapped with each other in the vicinity of the area where the difference between the accelerating voltage V_{ACC} and the revolution number equivalent voltage V_{FV} becomes "zero" as shown in Fig. 10. This gives rise to such inconveniences as that the feed of electric current and dynamic braking to the motor 101 are executed at the same time in such overlapped area, and the transistors TR1, TR3, TR2 and TR4 of the motor driving portion 100 are dead shorted to flow a huge amount of electric current, thus resulting in destruction thereof. Furthermore, since the folded straight line of Fig. 8 cannot be made into a straight line, there was a problem in respect of operation feeling in the above-mentioned speed control device of Fig. 6.

### [OBJECT OF THE INVENTION]

An object of the present invention is to provide, in order to obviate the above-mentioned inconveniences, a speed control device for electric motor vehicles which particularly has a favorable linearity in speed control and in which a favorable operation feeling can be obtained.

### [MEANS FOR SOLVING THE PROBLEM]

The present invention includes a chopping wave generator for generating a reference chopping wave for controlling speed, a drive control portion for finding a difference between separately input accelerating voltage and motor revolution number equivalent voltage corresponding to the revolution number of said motor, comparing the same with said reference chopping wave and generating a motor driving PWM signal, a brake control portion for finding a difference between said revolution number equivalent voltage and said accelerating voltage, forming and outputting a dynamic braking PWM signal and a brake switching signal based on said difference and outputting the same, a switch control portion for switching said PWM signal of said drive control portion and said PWM signal of said brake control portion from one to the other in accordance with said brake switching signal and outputting the correctly switched signal, and a motor driving portion for drive controlling or brake controlling said motor in accordance with the output of said PWM signal of said switch control portion. It further includes at an input stage of said brake control portion a chopping wave generator for forming a chopping wave having an inverted waveform relative to said reference chopping wave as a dynamic braking PWM signal and outputting the same.

### [OPERATION]

In the present invention, first, a reference chopping wave for controlling the speed is generated in the chopping wave generator. In the drive control portion, by finding a difference between the accelerating voltage to be input separately and the motor revolution number equivalent voltage corresponding to the resolution number of the motor and comparing the same with the reference chopping wave, a PWM signal for driving the motor is formed. In the inverted chopping wave generator, a chopping wave having a reverted waveform relative to the reference chopping wave is formed as a dynamic braking PWM signal and output to the input stage of the brake control. In the brake control portion, the difference between the revolution number equivalent voltage and the accelerating voltage is found and a dynamic braking PWM signal and a brake switch signal are formed based on such difference. In the switch control portion, the PWM signal of the drive control portion and the PWM signal of the brake control portion are switched one to the other in accordance with the brake switch signal and output. In the motor drive portion, a motor drive control or brake control is executed in accordance with the PWM signal output by this switch control portion. By inputting a chopping wave having an inverted waveform from the inverted chopping wave into the brake control portion, the tolerance for switching the PWM signal of the drive control portion and the PWM signal of the brake control portion from one to the other becomes unnecessary.

### [EMBODIMENT]

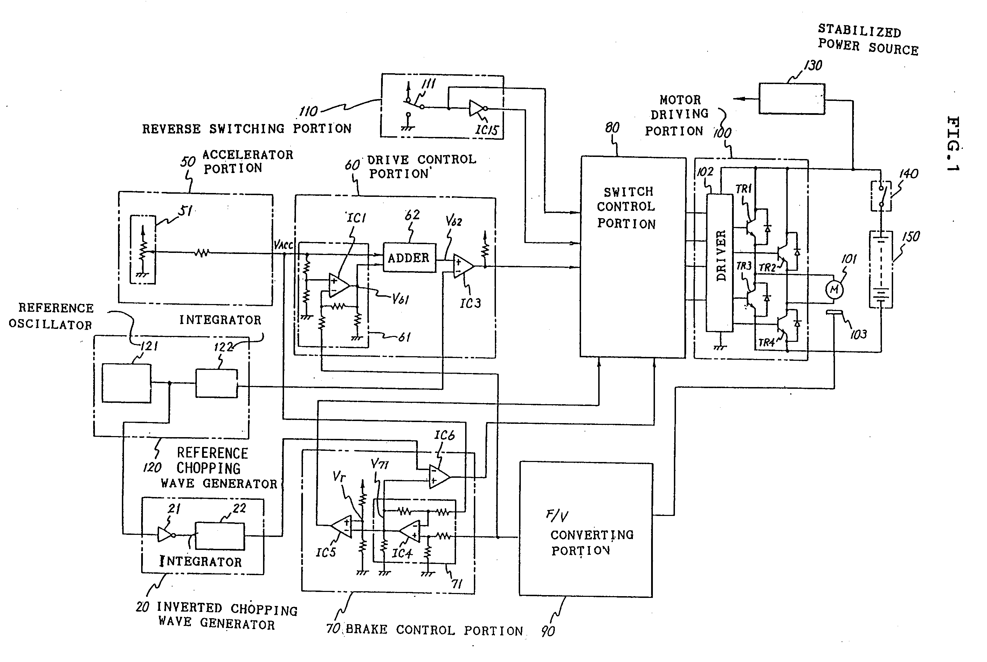

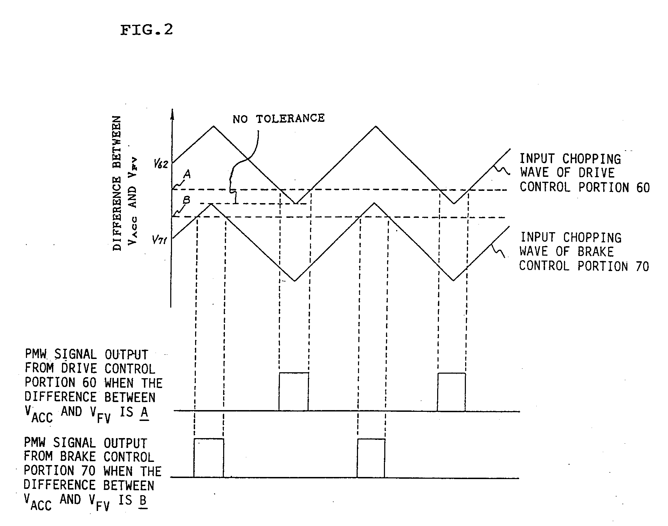

One embodiment of the present invention will be described hereinafter with reference to Figs. 1 and 2.

In this embodiment, identical component parts with those of the afore-mentioned speed control device of Fig. 6 are denoted by identical reference numerals, and description thereof will be omitted.

This embodiment is characterized in that in the speed control device of Fig. 6, an inverted chopping wave generator 20 for generating an inverted chopping waveform relative to the reference chopping wave and inputting the same into the brake control portion 70 is disposed on the input stage of the comparator IC 6 of the brake control portion 70. This inverted chopping wave generator 20 includes an inverting buffer 21 for inverting a reference frequency pulse of a reference generator 121, and an integrator 22 for integrating the output of this inverted buffer 21 and outputting the same in the form of a chopping wave.

The remaining constitution is the same as the afore-mentioned device of Fig. 6.

Shown in Fig. 2 is a chart of a relation between PWM signal outputs of a drive control portion 60 and a brake control portion 70 relative to a difference between an accelerating voltage V_{ACC} and a revolution number equivalent voltage V_{FV}. Fig. 2 corresponds to the afore-mentioned Fig. 7, and is characterized in the respect that the graph of the area corresponding to the output V₇₁ of the subtractor 71 of the brake control portion 70 is different, and the tolerance between the input chopping waveforms of the drive control portion 60 and brake control portion 70 is removed by adjusting the maximum and minimum voltages of the reference chopping wave from the reference chopping wave generator 120, the preset voltage Vᵣ of the comparator IC 5, and gains of the drive control portion 60, the brake control portion 70, etc.

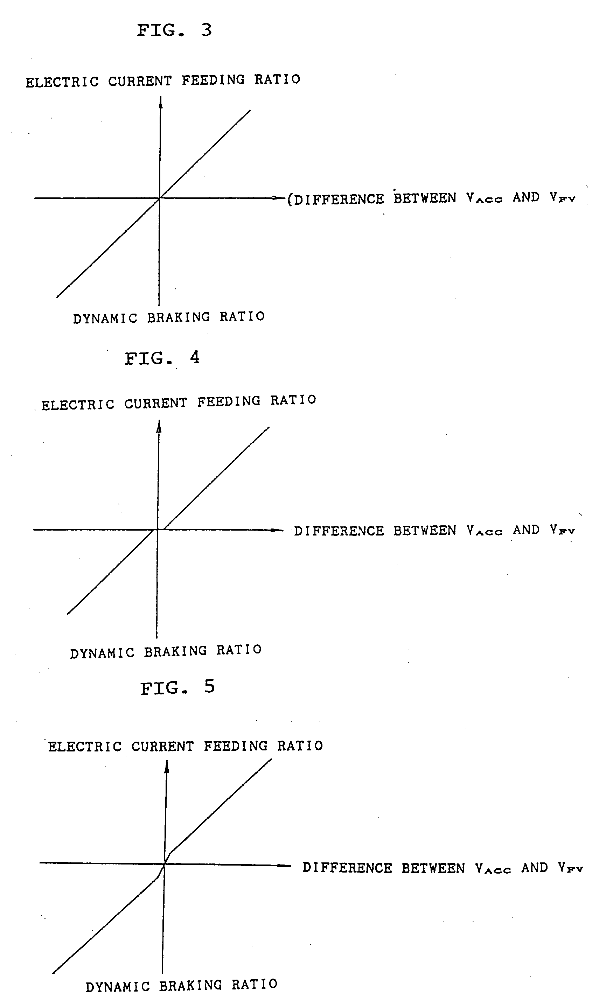

In the case of Fig. 2, the relation between the ratios of feed of current and dynamic braking to a motor 101 relative to the difference between the accelerating voltage V_{ACC} and the revolution number equivalent voltage V_{FV} becomes an ideal linear form as shown in Fig. 3.

The space between the input chopping waveforms of the drive control portion 60 and brake control portion 70 in Fig. 2 becomes narrow due to irregularity of various component elements, and the relation between the ratios of feed of electric current and dynamic braking to the motor 101 relative to the difference between the accelerating voltage V_{ACC} and the revolution number equivalent voltage V_{FV} in a state corresponding to the fore-mentioned Fig. 10 becomes almost a linear line although it is somewhat folded as shown in Fig. 4. As apparent from the vicinity of the area where the difference between the accelerating voltage V_{ACC} and the revolution number equivalent voltage V_{FV} of Fig. 2 showing a chart becomes "zero", since there is no area where the input chopping waveforms of the drive control portion 60 and brake control portion 70 are overlapped with each other as previously described, the feed of electric current and dynamic braking to the motor 101 are not executed at the same time and the transistors TR1, TR3, TR2 and TR4 of the motor driving portion 100 are not dead shorted.

In case the space between the input chopping waveforms of the drive control portion 60 and brake control portion 70 becomes wide in Fig. 2, the input chopping waveforms of the drive control portion 60 and brake control portion 70 are slightly spaced apart and becomes very close to a state corresponding to the afore-mentioned Fig. 7. The relation between the ratios of feed of electric current and dynamic braking to the motor 101 relative to the difference between the accelerating voltage V_{ACC} and the revolution number equivalent voltage V_{FV} becomes the one shown in Fig. 5. In this case, although it exhibits a relation close to that shown in Fig. 8 but the folded part is small and almost linear line.

In this way, since the relation between the ratios of feed of electric current and dynamic braking to the motor 101 relative to the difference between the accelerating voltage V_{ACC} and the revolution number equivalent voltage V_{FV} becomes almost a linear line even if the various component elements are irregular, the operation feeling is improved by improving the linearity of speed control.

In this embodiment, although the inverted chopping wave generator 20 as a source of generation of a chopping wave having an inverted waveform relative to the reference chopping wave comprises the inverted buffer 21 and the integrator 22, the reference chopping wave as an output of the reference chopping wave generator 120 may be inverted.

As described in the foregoing, according to this embodiment, by generating a chopping wave having an inverted waveform relative to the reference chopping wave and inputting the same into the comparator IC 6 of the brake control portion 70, the feed of electric current feeding and dynamic braking to the motor 101 are not executed at the same time, and the relation between the ratios of feed of current and dynamic braking to the motor 101 relative to the difference between the accelerating voltage V_{ACC} and the revolution number equivalent voltage V_{FV} can be made into a linear form. By this, linearity of speed control can be improved. As a result, a favorable operation feeling can be obtained irrespective of the opening degree of acceleration and vehicle speed.

### [EFFECT OF THE INVENTION]

Since the present invention is such constituted and operated as mentioned in the foregoing, there can be provided such an excellent speed control device for electric motor vehicles as never had in the past. According to this device, by generating a chopping wave having an inverted waveform relative to the reference chopping wave and inputting the same into the brake control portion, the feed of electric current and dynamic braking to the motor are not executed at the same time, and the relation between the ratios of feed of current and dynamic braking to the motor relative to the difference between the accelerating voltage and the revolution number equivalent voltage can be made into a linear form. By this, linearity of speed control can be improved. As a result, a favorable operation feeling can be obtained irrespective of the opening degree of acceleration and vehicle speed.

### [BRIEF DESCRIPTION OF THE DRAWING]

### [Fig. 1]

Block diagram showing the constitution of one embodiment of the present invention.

### [Fig. 2]

Chart showing a relation between the PWM signals output from the drive control portion and the brake control portion relative to a difference between the accelerating voltage and the revolution number equivalent voltage in Fig. 1.

### [Figs. 3 through 5]

Charts showing the controlled states of the electric current feeding ratio and the dynamic braking ratio by the device of Fig. 1.

### [Fig. 6]

Block diagram showing the constitution of a speed control device as a base of the embodiment of Fig. 1.

### [Fig. 7]

Chart showing a relation between the PWM signals output from the drive control portion and the brake control portion relative to a difference between the accelerating voltage and the revolution number equivalent voltage in Fig. 6.

### [Fig. 8]

Chart showing the controlled states of the electric current feeding ratio and the dynamic braking ratio by the device of Fig. 6.

### [Fig. 9]

Chart showing a relation of a preset value of the brake signal output of the brake control portion relative to the waveform of the reference chopping wave in the device of Fig. 6.

### [Fig. 10]

Chart for explaining the problems to be solved by the invention.

### [DESCRIPTION OF REFERENCE NUMERALS]

- 20: inverted chopping wave generator
- 60: drive control portion
- 70: brake control portion
- 80: switch control portion
- 100: motor driving portion
- 101: motor
- 120: reference chopping wave generator

## Claims

1. A speed control device for electric motor vehicles including a chopping wave generator (120) for generating a reference chopping wave for controlling speed, a drive control portion (60) for finding a difference between separately input accelerating voltage (V_{ACC}) and motor revolution number equivalent voltage (V_{FV}) corresponding to the revolution number of said motor, comparing the same with said reference chopping wave and generating a motor driving PWM signal, a brake control portion (70) for finding a difference between said revolution number equivalent voltage (V_{FV}) and said accelerating voltage (V_{AC}), forming and outputting a dynamic braking PWM signal and a brake switching signal based on said difference and outputting the same, a switch control portion (80) for switching said PWM signal of said drive control portion (60) and said PWM signal of said brake control portion (70) from one to the other in accordance with said brake switching signal and outputting the correctly switched signal, and a motor driving portion (100) for drive controlling or brake controlling said motor (101) in accordance with the output of said PWM signal of said switch control portion (80), wherein said speed control device for electric motor vehicles is characterized in that said brake control portion (70) is provided at an input stage thereof with a chopping wave generator (20) for forming a chopping wave having an inverted wave form relative to said reference chopping wave as a dynamic braking PWM signal and outputting the same.

## Patentansprüche

1. Geschwindigkeitsregelvorrichtung für Elektromotor-Fahrzeuge, die folgendes enthält: einen Zerhackungswellen-Generator (120) zum Erzeugen einer Referenz-Zerhackungswelle zum Regeln der Geschwindigkeit, einen Antriebs-Regelungsteil (60) zum Finden einer Differenz zwischen einer separat eingegebenen Beschleunigungsspannung (V_{ACC}) und einer zu der Motor-Umdrehungszahl äquivalenten Spannung (V_{FV}), die der Umdrehungszahl des Motors entspricht, zum vergleichen derselben mit der Referenz-Zerhackungswelle und zum Erzeugen eines Motor-Antriebs-PWM-Signals, einen Brems-Regelungsteil (70) zum Finden einer Differenz zwischen der zu der Umdrehungszahl äquivalenten Spannung (V_{FV}) und der Beschleunigungsspannung (V_{ACC}), zum Ausbilden und Ausgeben eines dynamischen Brems-PWM-Signals und eines Brems-Umschaltsignals basierend auf der Differenz und zum Ausgeben desselben, einen Umschalt-Regelungsteil (80) zum Umschalten des PWM-Signals des Antriebs-Regelungsteils (60) und des PWM-Signals des Brems-Regelungsteils (70) von einem zu dem anderen in Übereinstimmung mit dem Brems-Umschaltsignal und zum Ausgeben des richtig umgeschalteten Signals, und einen Motor-Antriebsteil (100) zum Regeln des Antriebs oder Regeln des Bremsens des Motors (101) in Übereinstimmung mit der Ausgabe des PWM-Signals des Umschalt-Regelungsteils (80), wobei die Geschwindigkeitsregelvorrichtung für Elektromotor-Fahrzeuge **dadurch gekennzeichnet** ist, daß der Brems-Regelungsteil (70) an seiner Eingangsstufe mit einem Zerhackungswellen-Generator (20) versehen ist zum Ausbilden einer Zerhackungswelle mit einer relativ zu der Referenz-Zerhackungswelle invertierten Wellenform als dynamisches Brems-PWM-Signal und zum Ausgeben desselben.

## Revendications

1. Dispositif de commande de vitesse pour véhicules à moteur électrique, comprenant un générateur d'onde de modulation (120) destiné à produire une onde de modulation de référence pour commander la vitesse, une partie de commande d'entraînement (60) pour détecter la différence entre une tension d'accélération entrée (V_{ACC}) et la tension équivalente de nombre de tours du moteur (V_{FV}) correspondant au nombre de tours de ce moteur, comparant celle-ci avec l'onde de modulation de référence et produisant un signal de modulation d'impulsion en largeur d'entraînement moteur, une partie de commande de freinage (70) pour détecter la différence entre la tension équivalente de nombre de tours (V_{FV}) et la tension d'accélération (V_{ACC}), formant et émettant un signal de modulation d'impulsion en largeur de freinage dynamique et un signal de commutation de fréquence basé sur la différence et émettant celui-ci, une portion de commande de commutateur 80 pour commuter réciproquement le signal de modulation d'impulsion en largeur de la partie de commande d'entraînement (60) et le signal de modulation d'impulsion en largeur de la partie de commande de freinage (70) en fonction du signal de commutation de freinage et émettant le signal correctement commuté, et une partie d'entraînement de moteur (100) pour commander l'entraînement ou commander le freinage du moteur (101) en fonction du signal d'impulsion en largeur émis par la portion de commande du commutateur (50), dans lequel le dispositif de commande de vitesse pour les véhicules à moteur électrique est caractérisé en ce que la portion de commande de freinage (70) comporte au niveau de son étage d'entrée un générateur d'onde de modulation (20) pour former une onde de modulation inversée par rapport à l'onde de modulation de référence sous forme de signal de modulation d'impulsion en largeur de freinage dynamique et pour émettre celui-ci.
